# EUROPEAN PATENT APPLICATION

(11) **EP 2 801 710 A1**
(43) Date of publication of application: **12.11.2014**
(21) Application number: 12864269.1
(22) Date of filing: 04.01.2012
(51) Int. Cl.: F01N 3/025, F01N 3/023, F01N 3/029, F01N 3/36

(54) **EXHAUST HEATING METHOD**

(71) Applicant: Toyota Jidosha Kabushiki Kaisha, Toyota-shi, Aichi 471-8571 (JP)
(72) Inventor: TSUJIMOTO, Kenichi, Toyota-shi Aichi 471-8571 (JP); INOUE, Mikio, Toyota-shi Aichi 471-8571 (JP)
(74) Representative: Intès, Didier Gérard André
(86) International application number: PCT/JP2012/000006
(87) International publication number: WO 2013/102946

(57) **Abstract**

A method according to the present invention is for heating exhaust gas to be introduced into an exhaust-gas purifying device (26) from an internal combustion engine by supplying fuel into an exhaust passage (23a) from a fuel supply valve (27a) disposed upstream of the exhaust gas purifying device (26) in an exhaust pipe (23) upstream of the exhaust gas purifying device (26), and then by heating and igniting the fuel added into the exhaust passage (23a), and includes the steps of determining a necessity for supplying fuel into the exhaust passage (23a), setting an amount of fuel to be supplied into the exhaust passage (23a) from the fuel supply valve (27a), the amount being set when it is judged in the determining step that fuel needs to be supplied into the exhaust passage (23a), checking an operating state of the internal combustion engine, and controlling an air-fuel ratio of exhaust gas to be released into the exhaust passage (23a) from a combustion chamber of the internal combustion engine such that the air-fuel ratio falls within a region where amounts of both smoke and HC to be generated in the exhaust gas flowing through the exhaust passage (23a) are low in the operating state of the internal combustion engine checked in the checking step.

## Description

### Technical Field

The present invention relates to a method of heating exhaust gas to be introduced into an exhaust gas purifying device by supplying fuel into an exhaust passage from a fuel supply valve disposed upstream of the exhaust gas purifying device in an exhaust pipe, and then by heating and igniting the fuel.

### Background Art

In recent years, coping with strict emission standards set on internal combustion engines has lead to a necessity for facilitating the activation of an exhaust gas purifying device at the start of its internal combustion engine, maintaining its active state during the operation of the internal combustion engine, and so on. In this respect, Japanese Patent Laid-Open No. 2010-084710 and the like have proposed internal combustion engines in which an exhaust gas heating device is installed upstream of an exhaust gas purifying device in an exhaust passage. This exhaust gas heating device generates heating gas within exhaust gas and supplies this generated heating gas into the exhaust gas purifying device given at the downstream side to thereby facilitate the activation of the exhaust gas purifying device and maintain its active state. To do so, the exhaust gas heating device generally includes a fuel supply valve which adds fuel into the exhaust passage, and an igniter such as a glow plug which heats and ignites the fuel to generate heating gas. Meanwhile, in the conventional exhaust gas heating device disclosed in Japanese Patent Laid-Open No. 2010-084710, the igniter is disposed in proximity to the fuel supply valve. Hence, the fuel supplied into the exhaust passage from the fuel supply valve and the exhaust gas may fail to be mixed sufficiently, leading to incomplete combustion of the ignited fuel in some cases. To solve this, Japanese Patent Laid-Open No. 2010-084710 proposes an idea that a receiving plate which receives the fuel injected from the fuel supply valve and scatters that fuel inside the exhaust passage is installed in the exhaust passage.

### Citation List

### Patent Literature

PTL 1: Japanese Patent Laid-Open No. 2010-084710

### Summary of Invention

### Technical Problem

The fuel addition into the exhaust passage differs from the fuel injection into the combustion chamber of the engine in that the injection pressure of the fuel tends to be low and the pressure and temperature thereof tend to be absolutely low as well. This retards the fuel's vaporization and causes residual droplets of the fuel within the exhaust gas. Thus, the fuel supplied into the exhaust passage may fail to be well combusted depending upon the operating state of the internal combustion engine, which in turn leads to a possibility of generating a large amount of smoke (or soot). For example, when the exhaust gas flowing through the exhaust passage has a high oxygen concentration or a high exhaust gas temperature, the combustion rate of the fuel during ignition by the igniter tends to increase, thus generating a large amount of smoke. Consequently, unburned fuel flows to the downstream side as it is, resulting in the unburned fuel adhering to a catalytic converter forming part of the exhaust gas purifying device and the fuel passing therethrough, thereby possibly generating white smoke.

In the conventional exhaust gas heating device disclosed in Japanese Patent Laid-Open No. 2010-084710, the igniter is disposed in proximity to the fuel supply valve, and hence the fuel supplied into the exhaust passage from the fuel supply valve and the exhaust gas may fail to be mixed sufficiently, leading to incomplete combustion of the ignited fuel in some cases. This in turn causes the generation of a large amount of smoke and clogging of the catalytic converter forming part of the exhaust gas purifying device, which is troublesome. As a result, there arises a problem that the catalytic converter needs to undergo frequent regeneration processes, deteriorating the fuel efficiency due to the consumption of fuel for the frequent regeneration processes.

An object of the present invention is to provide a method capable of always reducing the generation of smoke and HC to a small amount when fuel is supplied into an exhaust passage from a fuel supply valve disposed upstream of an exhaust gas purifying device in an exhaust pipe, and then by heating and igniting the fuel to heat exhaust gas to be introduced into the exhaust gas purifying device.

### Solution to Problem

A method according to the present invention of heating exhaust gas to be introduced into an exhaust gas purifying device from an internal combustion engine by supplying fuel into an exhaust passage from a fuel supply valve disposed upstream of the exhaust gas purifying device in an exhaust pipe upstream, and then by heating and igniting the fuel supplied into the exhaust passage, comprises the steps of determining a necessity for supplying fuel into the exhaust passage, setting an amount of fuel to be supplied into the exhaust passage from the fuel supply valve, the amount being set when it is judged in the determining step that fuel needs to be supplied into the exhaust passage, checking an operating state of the internal combustion engine, and controlling an air-fuel ratio of exhaust gas to be released into the exhaust passage from a combustion chamber of the internal combustion engine such that the air-fuel ratio falls within an area where amounts of both smoke and HC to be generated in the exhaust gas flowing through the exhaust passage are low in the operating state of the internal combustion engine checked in the checking step.

The combustion state of the fuel in the exhaust gas heating device varies among a state where the combustion is good, a state where smoke is easily generated, and a state where unburned fuel easily remains, depending upon the operating state of the internal combustion engine. When the exhaust gas heating device of the present invention is used to heat the exhaust gas, the amount of the fuel to be injected into the combustion chamber of the internal combustion engine from the fuel injection valve is controlled according, for example, to states such as the temperature of the exhaust gas, the exhaust flow rate, and the oxygen concentration of the exhaust gas so as to reduce the amount of the oxygen to be released into the exhaust passage from the combustion chamber of the internal combustion engine. Accordingly, the operating state is set such that it is difficult for smoke and unburned fuel to be contained in the exhaust gas flowing downstream of the exhaust gas heating device in the exhaust passage, thereby allowing the maintenance of a good combustion state for the fuel to be supplied into the exhaust passage.

In the exhaust gas heating method according to the present invention, the controlling step may include at least one of the steps of setting an amount of fuel to be injected into the combustion chamber of the internal combustion engine from a fuel injection valve such that an amount of oxygen to be released into the exhaust passage from the combustion chamber of the internal combustion engine is reduced, setting an opening degree of a throttle valve, and setting an opening degree of an EGR control valve. Here, it is effective that the step of setting the fuel supply amount include a step of correcting the fuel supply amount set in the step of setting the fuel supply amount by reducing the fuel supply amount in accordance with the fuel injection amount set in the step of setting the fuel injection amount.

The controlling step may include the step of setting the fuel injection amount, the checking step may include a step of obtaining a temperature of the exhaust gas, and the exhaust gas heating method may further include a step of correcting the fuel injection amount set in the step of setting the fuel injection amount in accordance with the temperature of the exhaust gas obtained in the step of obtaining the temperature of the exhaust gas. Here it is effective that, in the step of correcting the fuel injection amount, the fuel injection amount set in the step of setting the fuel injection amount be corrected by increasing the fuel injection amount during an operating state in which the temperature of the exhaust gas is high, while the fuel injection amount set in the step of setting the fuel injection amount is corrected by reducing the fuel injection amount during an operating state in which the temperature of the exhaust gas is low.

The controlling step may include the step of setting the fuel injection amount, the checking step may include a step of obtaining an air-fuel ratio of the exhaust gas to be released into the exhaust passage from the combustion chamber of the internal combustion engine, and the exhaust gas heating method may further comprise a step of correcting the fuel injection amount set in the step of setting the fuel injection amount in accordance with the air-fuel ratio of the exhaust gas obtained in the step of obtaining the air-fuel ratio of the exhaust gas. Here, it is effective that in the step of correcting the fuel injection amount, the fuel injection amount set in the step of setting the fuel injection amount be corrected by increasing the fuel injection amount when the air-fuel ratio of the exhaust gas is within a lean region, while the fuel injection amount set in the step of setting the fuel injection amount is corrected by reducing the fuel injection amount when the air-fuel ratio of the exhaust gas is within a rich region.

Preferably, the exhaust gas purifying device includes a DPF (Diesel Particulate Filter), and the step of setting the fuel injection amount includes a step of correcting the fuel injection amount set in the step of setting the fuel injection amount by reducing the fuel injection amount when it is judged that fuel needs to be supplied into the exhaust passage in the determining step during a regeneration process of the DPF.

### Advantageous Effects of Invention

The flow rate of the exhaust gas flowing through the exhaust passage largely varies depending upon the operating state of the internal combustion engine. Thus, it is extremely difficult to perform accurate control on the combustion of the fuel supplied into the exhaust passage from the fuel supply valve without being affected by such variations in the flow rate of the exhaust gas. However, the present invention controls the air-fuel ratio of the exhaust gas which is released into the exhaust passage from the combustion chamber of the internal combustion engine when the fuel is supplied into the exhaust passage. Thus, the air-fuel ratio can fall within an area where the amounts of smoke and HC to be generated are both low. For example, when the exhaust gas heating device heats the exhaust gas in a state where the fuel injection into the combustion chamber of the internal combustion engine is stopped, such as during deceleration of the vehicle, fuel is supplied into the combustion chamber of the internal combustion engine without combustion and is mixed with the exhaust gas. This lowers the oxygen concentration of the exhaust gas, thereby making it possible to reduce the generation of smoke.

When the controlling step includes at least one of the steps of setting the fuel injection amount, setting the throttle valve opening degree, and setting the EGR control valve opening degree, the air-fuel ratio of the exhaust gas to be released into the exhaust passage from the combustion chamber of the internal combustion engine can be controlled rapidly and accurately.

When the fuel supply amount set in the step of setting the fuel supply amount is corrected by reducing it in accordance with the fuel injection amount set in the step of setting the fuel injection amount, the release of unburned fuel can further be reduced.

Similarly, the release of unburned fuel can further be reduced as well when the fuel injection amount set in the step of setting the fuel injection amount is corrected according to the exhaust gas temperature obtained in the step of obtaining the exhaust gas temperature. Specifically, the fuel injection amount is corrected by increasing it during an operating state in which the exhaust gas temperature is high, while the fuel injection amount set in the step of setting the fuel injection amount is corrected by reducing it during an operating state in which the exhaust gas temperature is low. In this way, the generation of smoke can be reduced together with the reduction of unburned fuel.

When the exhaust gas heating method further includes the step of correcting the fuel injection amount set in the step of setting the fuel injection amount in accordance with the air-fuel ratio of the exhaust gas obtained in the step of obtaining the air-fuel ratio of the exhaust gas, an increase in the amount of unburned fuel can further be suppressed. Specifically, the fuel injection amount is corrected by increasing it in a case where the air-fuel ratio of the exhaust gas is within a lean region, while the fuel injection amount is corrected by reducing it in a case where the air-fuel ratio of the exhaust gas is within a rich region. In this way, the generation of smoke can be reduced together with the reduction of unburned fuel.

When the exhaust gas purifying device includes a DPF, and the set fuel supply amount is corrected by reducing it in a case where fuel is supplied into the exhaust passage during a regeneration process of the DPF, the fuel consumption can be reduced. Moreover, since the DPF is in the regeneration process, smoke generated can be removed through oxidation thereof. Furthermore, the burnability of PM (Particulate Matter) can be enhanced along with an increase in the oxygen concentration of the exhaust gas flowing into the DPF.

### Brief Description of Drawings

[Fig. 1] Fig. 1 is a conceptual diagram of an embodiment of an engine system which is capable of implementing an exhaust gas heating method of the present invention;
[Fig. 2] Fig. 2 is a control block diagram of a main part of the embodiment shown in Fig. 1;
[Fig. 3] Fig. 3 is a graph schematically showing the relationship between the amount of fuel injected into a cylinder and the amounts of smoke and HC generated;
[Fig. 4] Fig. 4 is a graph schematically showing the relationship between the exhaust gas temperature and an area to be selected for a target air-fuel ratio;
[Fig. 5] Fig. 5 is a graph schematically showing the relationships between the exhaust gas temperature and oxygen concentration, and an area involving the generation of a large amount of smoke, an area involving the generation of a large amount of HC, and a preferable combustion area;
[Fig. 6] Fig. 6 is a graph schematically showing the relationships between the exhaust gas temperature and air-fuel ratio, and an area involving the generation of a large amount of smoke and a preferable combustion area;
[Fig. 7] Fig. 7 is graph schematically showing the relationships between the intake flow rate and air-fuel ratio, and an area involving the generation of a large amount of smoke and a preferable combustion area;
[Fig. 8] Fig. 8 is a flowchart showing a procedure related to fuel addition control of the embodiment;
[Fig. 9] Fig. 9 is a flowchart showing a specific procedure in a fuel-injection-amount setting step in Fig. 8;
[Fig. 10] Fig. 10 is a flowchart showing a specific procedure in a fuel-addition-amount setting step in Fig. 8; and [Fig. 11] Fig. 11 is a flowchart showing a specific procedure in an injection-amount air-fuel ratio correcting step in Fig. 8.

### Description of Embodiments

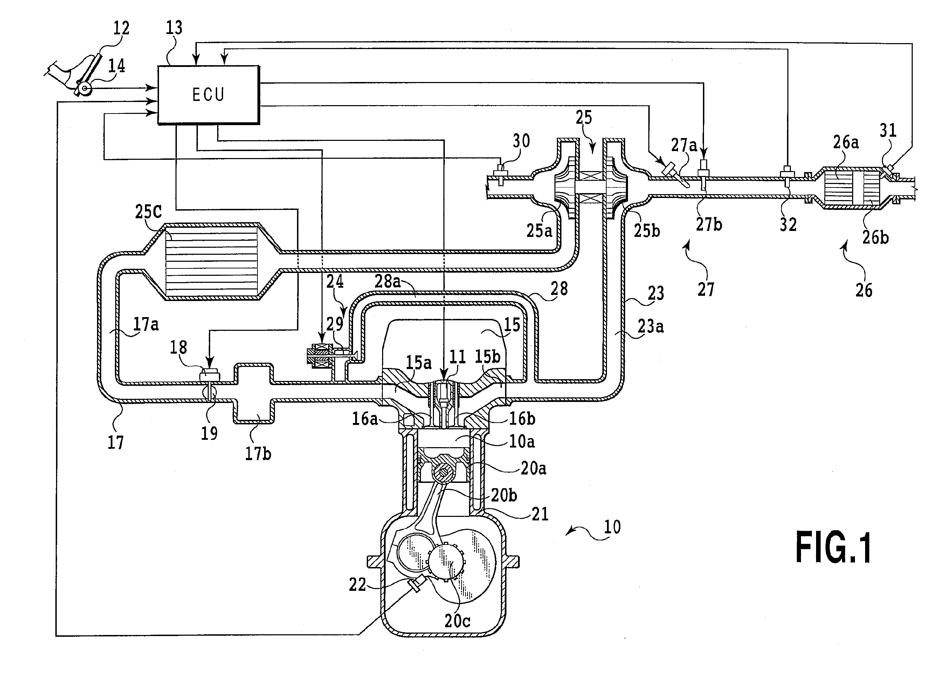

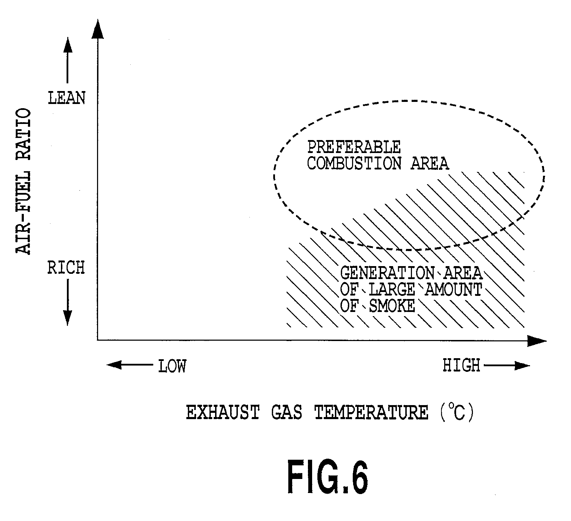

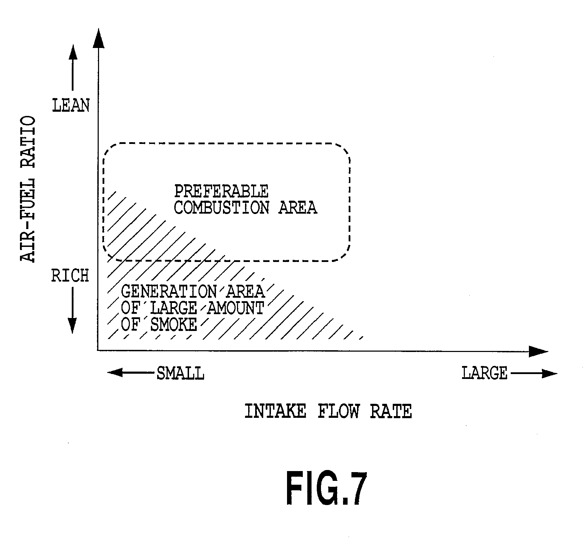

An embodiment of a compression-ignition internal combustion engine capable of implementing an exhaust gas heating method of the present invention will be described in detail with reference to Figs. 1 to 11. Note that the present invention is not limited to this embodiment, and its configuration can be changed freely according to the specifications, characteristics, and the like required.

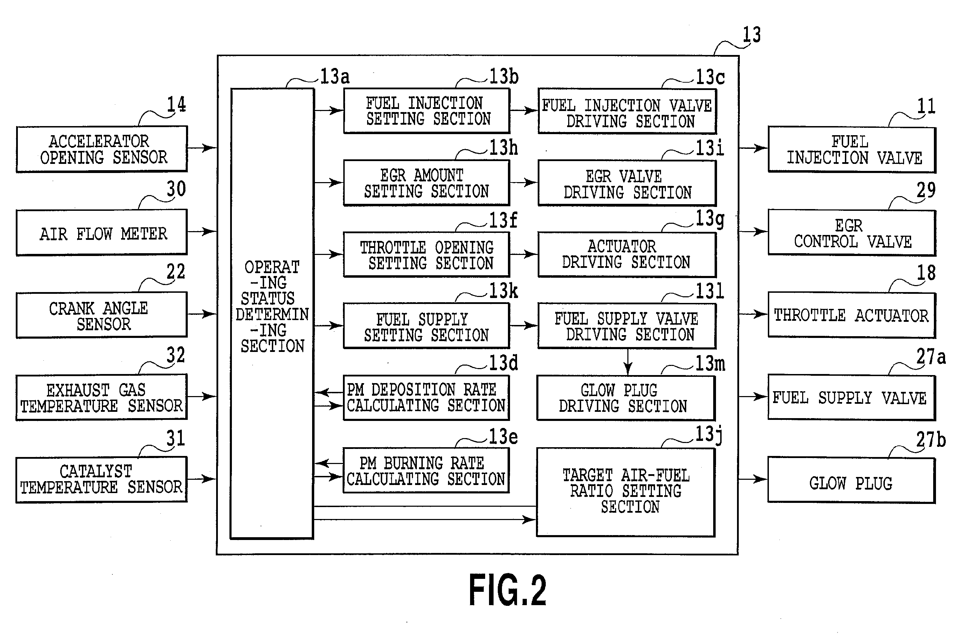

Fig. 1 schematically shows a main part of an engine system of this embodiment, and Fig. 2 shows a control block thereof. It is to be noted that a valve gear and the like for air intake and exhaust to and from an engine 10 are omitted in Fig. 1 for simplicity and convenience.

The engine 10 of this embodiment is an internal combustion engine of a compression ignition type which causes spontaneous ignition of diesel oil, serving as fuel, by injecting the diesel oil from a fuel injection valve 11 directly into a combustion chamber 10a being in a compressed state.

An ECU (Electronic Control Unit) 13 controls the amount of fuel to be supplied into the combustion chamber 10a from the fuel injection valve 11 (hereinafter, referred to as the fuel injection amount) and the timing of the injection on the basis of the vehicle's operating state including the amount of the driver's depression of an accelerator pedal 12. An accelerator opening sensor 14 detects this amount of depression of the accelerator pedal 12 (hereinafter, referred to as the accelerator opening degree) θ_{A} and outputs the detected information to the ECU 13.

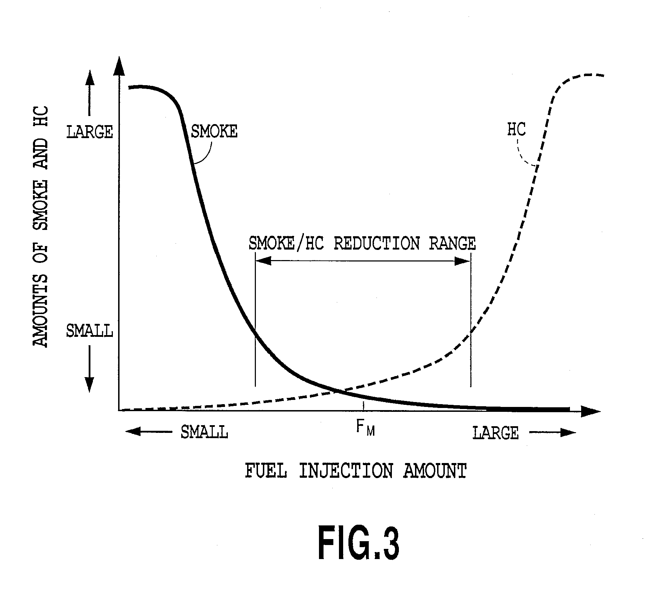

In this embodiment, two injection modes are set for the fuel injection into the combustion chamber 10a from the fuel injection valve 11. Specifically, one is an engine driving mode in which fuel is subjected to compression ignition and combusted inside the combustion chamber 10a to obtain an output of the engine 10. The other is an exhaust gas heating mode in which injected fuel is not ignited inside the combustion chamber 10a but is flowed as it is into a later-described exhaust passage 23a. Fig. 3 schematically shows the relationship between the fuel injection amount and the amounts of smoke and unburned HC in the exhaust gas in the exhaust gas heating mode. As is obvious from Fig. 3, there is a tendency that the generated smoke increases as the fuel injection amount decreases, and conversely the amount of unburned HC increases as the fuel injection amount increases. Thus, the smoke and HC can both be reduced to a small amount by setting the fuel injection amount within an appropriate smoke/HC reduction range given in Fig. 3.

In this embodiment, when a fuel injection process is needed during the exhaust gas heating mode, the fuel injection amount is set to F_{M} which is situated substantially at the center of the smoke/HC reduction range. However, when a PM burning rate V_{B} is higher than a rate V_{D} of PM deposition onto a DPF 26b of a later-described exhaust gas purifying device 26 during a regeneration process of the DPF 26b, smoke will be processed in the DPF 26b even if a large amount of smoke is generated. Thus, in this case, the fuel injection amount is corrected by reducing it by ΔF_{M} so as to suppress unnecessary fuel consumption and also avoid the generation of unburned HC.

Moreover, the amounts of smoke and unburned HC to be generated vary when an exhaust gas temperature T_{E} is too low or too high. Thus, the fuel injection amount is further corrected according to the exhaust gas temperature T_{E}. More specifically, when the exhaust gas temperature T_{E} is below a preset first threshold temperature T_{L}, the amount of smoke to be generated is highly likely to decrease, and therefore the fuel injection amount is corrected by reducing it by ΔF_{T}, thereby suppressing an increase in the amount of unburned HC to be generated. On the other hand, when the exhaust gas temperature T_{E} is higher than a preset second threshold temperature T_{H}, the amount of smoke to be generated is highly likely to increase, and therefore the fuel injection amount is corrected by increasing it by ΔF_{T}, thereby suppressing an increase in the amount of smoke to be generated.

Likewise, in this embodiment, the amounts of smoke and unburned HC to be generated vary also when an actual air-fuel ratio R_{N} differs greatly from a target air-fuel ratio R_{T} by, for example, ±ΔR. Thus, the fuel injection amount is further corrected according to the air-fuel ratio R_{N}. More specifically, when the air-fuel ratio R_{N} is leaner by ΔR than the target air-fuel ratio R_{T}, smoke is easily generated, and therefore the fuel injection amount is corrected by increasing it by ΔF_{R}. On the other hand, when the air-fuel ratio R_{N} is richer by ΔR than the target air-fuel ratio R_{T}, unburned HC is easily generated, and therefore the fuel injection amount is corrected by reducing it by ΔF_{R}.

Note that instead of the fuel-injection-amount correcting processes described above or in addition to the fuel-injection-amount correcting processes, at least one of the air intake amount and the EGR amount may be controlled. In this way too, a similar advantageous effect can be achieved.

The ECU 13 includes an operating status determining section 13a, a fuel injection setting section 13b, a fuel injection valve driving section 13c, a PM deposition rate calculating section 13d, and a PM burning rate calculating section 13e. The operating status determining section 13a checks the operating state of the vehicle on the basis of information from the accelerator opening sensor 14, later-described various sensors, and the like. The fuel injection setting section 13b sets the amount of fuel to be injected from the fuel injection valve 11 and the timing of the injection on the basis of the result of the determination by the operating status determining section 13a. Note that the fuel injection setting section 13b basically sets the fuel injection amount to F_{M} when the exhaust gas heating mode is selected. The fuel injection valve driving section 13c controls the actuation of the fuel injection valve 11 such that fuel is injected from the fuel injection valve 11 by the amount and at the timing set by the fuel injection setting section 13b. The PM deposition rate calculating section 13d calculates the PM deposition rate V_{D} during the DPF regeneration process, and the PM burning rate calculating section 13e calculates the PM burning rate V_{B} during the DPF regeneration process. These calculations are performed by use of well-known methods.

In a cylinder head 15 forming therein an intake port 15a and an exhaust port 15b each in communication with the combustion chamber 10a, the unillustrated valve gear is installed which includes an intake valve 16a and an exhaust valve 16b which open and close the intake port 15a and the exhaust port 15b, respectively. The aforementioned fuel injection valve 11 is installed in this cylinder head 15 as well.

In an intake pipe 17 joined to the cylinder head 15 in communication with the intake port 15a and defining an intake passage 17a together with the intake port 15a, a throttle valve 19 is installed with which to adjust the opening degree of the intake passage 17a with a throttle actuator 18.

The aforementioned ECU 13 further includes a throttle opening setting section 13f and an actuator driving section 13g. The throttle opening setting section 13f sets the opening degree of the throttle valve 19 on the basis of the result of the checking by the aforementioned operating status determining section 13a. The actuator driving section 13g controls the actuation of the throttle actuator 18 such that the throttle valve 19 is set at the opening degree set by the throttle opening setting section 13f.

In a cylinder block 21 in which a piston 20a reciprocates, a crank angle sensor 22 is mounted which detects the rotational phase of a crankshaft 20c, i.e. the crank angle and outputs it to the ECU 13. The piston 20a is joined to the crankshaft 20c through a connecting rod 20b.

Based on the information from this crank angle sensor 22, the operating status determining section 13a of the ECU 13 checks the rotational phase of the crankshaft 20c and the engine speed as well as the travel speed of the vehicle and the like on a real-time basis.

Installed in the engine 10 are an EGR system 24, a exhaust turbocharger 25, the exhaust gas purifying device 26, and an exhaust gas heating device 27. The EGR system 24 introduces part of the exhaust gas, flowing inside the exhaust passage 23a, back into the intake passage 17a.

The EGR system 24 for primarily reducing nitrogen oxides in the exhaust gas includes an EGR pipe 28 which defines an EGR passage 28a and an EGR control valve 29 which is provided to this EGR pipe 28 to control the flow rate of the exhaust gas flowing through the EGR passage 28a. The EGR pipe 28 is in communication at one end with an exhaust pipe 23 defining the exhaust passage 23a together with the exhaust port 15b, and is in communication at the other end with a portion of the intake passage 17a between the above-mentioned throttle valve 19 and a surge tank 17b disposed downstream of the throttle valve 19.

In this embodiment, when the operating status determining section 13a of the ECU 13 determines that the vehicle equipped with the engine 10 is within a preset EGR operation region, the EGR amount setting section 13h of the ECU 13 sets the opening degree of the EGR control valve 29 in accordance with the operating state of the vehicle of that moment. The EGR valve driving section 13i of the ECU 13 controls the EGR control valve 29 at the opening degree set by the EGR amount setting section 13h. Besides the above case, the EGR valve driving section 13i basically drives the EGR control valve 29 such that the EGR control valve 29 shifts to a closed state to close the EGR passage 28a.

The exhaust turbocharger (hereinafter, simply referred to as the supercharger) 25 utilizes the kinetic energy of the exhaust gas flowing through the exhaust passage 23a to supercharge the combustion chamber 10a, thereby enhancing the air charging efficiency. The main part of the supercharger 25 of this embodiment is formed of an intake turbine 25a and an exhaust turbine 25b which rotates together with this intake turbine 25a. The intake turbine 25a is installed in an intermediate portion of the intake pipe 17 which is located upstream of the throttle valve 19. The exhaust turbine 25b is installed in an intermediate portion of the exhaust pipe 23 joined to the cylinder head 15 in communication with the exhaust port 15b. In this embodiment, an intercooler 25c is installed in an intermediate portion of the intake passage 17a between the intake turbine 25a and the surge tank 17b so as to lower the temperature of the intake air heated by heat transfer from the exhaust turbine 25b side through the intake turbine 25a.

An air flow meter 30 is provided upstream of the intake turbine 25a of the supercharger 25 in the intake pipe 17 and detects the flow rate of the intake air flowing through the intake passage 17a of this portion and outputs it to the ECU 13. Note that the one end of the EGR pipe 28 mentioned above is connected to a portion of the exhaust pipe 23 upstream of the exhaust turbine 25b.

The exhaust gas purifying device 26 for detoxifying toxic substances generated by the combustion of an air-fuel mixture in the combustion chamber 10a is installed in a portion of the exhaust pipe 23 defining a portion of the exhaust passage 23a downstream of the exhaust turbine 25b of the supercharger 25. The exhaust gas purifying device 26 of this embodiment includes an oxidation catalytic converter 26a and the DPF (Diesel Particulate Filter) 26b both being well known. Note that NOX (Nitrogen Oxides) catalytic converter or the like may further be included.

In this exhaust gas purifying device 26, a catalyst temperature sensor 31 is installed which detects a temperature T_{C} thereof (hereinafter, referred to as the catalyst temperature) and outputs it to the ECU 13. Moreover, an exhaust gas temperature sensor 32 is mounted upstream of the exhaust gas purifying device 26 and downstream of the exhaust gas heating device 27 in the exhaust pipe 23. This exhaust gas temperature sensor 32 detects a temperature T_{E} of the exhaust gas flowing through a portion of the exhaust passage 23a immediately before the exhaust gas purifying device 26 and outputs the detected information to the ECU 13.

Based on the information from the catalyst temperature sensor 31 and the exhaust gas temperature sensor 32, the ECU 13 of this embodiment determines the necessity for actuating the exhaust gas heating device 27, i.e. whether or not fuel needs to be supplied. The ECU 13 determines that fuel needs to be supplied normally when the catalyst temperature T_{C} is or is expected to be lower than a reference being the lowest possible temperature for the oxidation catalyst 26a to maintain its active state. However, some other conventionally well-known determining method can be employed optionally.

The exhaust gas heating device 27, the actuation of which is controlled based on the operating state of the vehicle and the state of the exhaust gas purifying device 26, is configured to heat the exhaust gas to be introduced into the exhaust gas purifying device 26 from the engine 10 to thereby rapidly activate the exhaust gas purifying device 26 and maintain its active state. The exhaust gas heating device 27 of this embodiment includes a fuel supply valve 27a and a glow plug 27b.

The fuel supply valve 27a for supplying fuel to activate the exhaust gas purifying device 26 or to maintain its active state is mounted to the exhaust pipe 23 in such a way as to face a portion of the exhaust passage 23a located downstream of the exhaust turbine 25b of the supercharger 25 but upstream of the exhaust gas purifying device 26. When the exhaust gas purifying device 26 comes in need of heating, or activation, fuel is supplied from this fuel supply valve 27a into the exhaust passage 23a by actuating the exhaust gas heating device 27 basically in a low-load operating state. The glow plug 27b for igniting the fuel supplied from the fuel supply valve 27a into the exhaust passage 23a has a heating portion on its tip side disposed downstream of the fuel supply valve 27a in the exhaust passage 23a. The fuel from the fuel supply valve 27a is supplied toward this heating portion. The glow plug 27b is connected to an unillustrated on-vehicle power supply through an unillustrated switch whose ON and OFF are controlled by the ECU 13. A glow plug driving section 13m of the ECU 13 switches the ON and OFF of the actuation of the glow plug 27b on the basis of information on the drive of the fuel supply valve 27a from a fuel supply valve driving section 131.

The ECU 13 further includes a target air-fuel ratio setting section 13j , a fuel supply setting section 13k, and the fuel supply valve driving section 131.

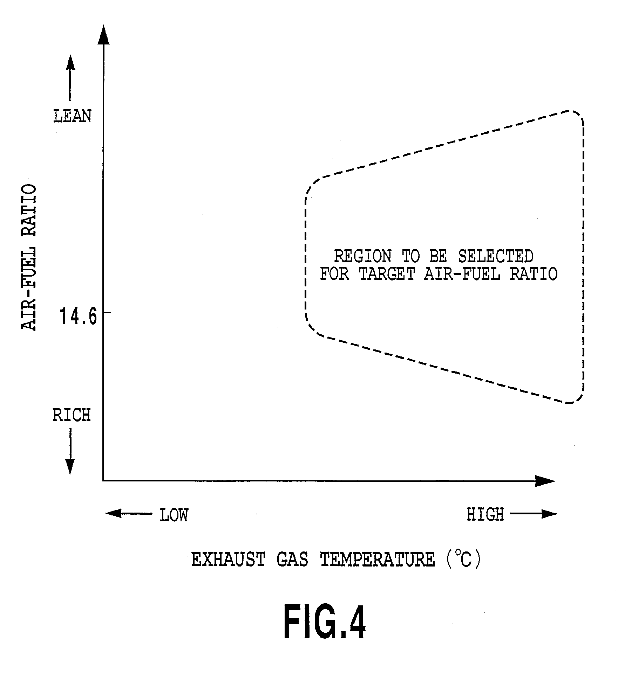

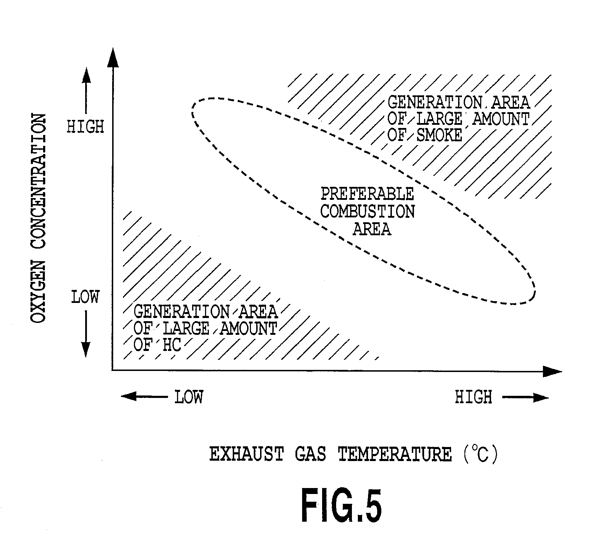

The target air-fuel ratio setting section 13j sets the target air-fuel ratio R_{T} of the exhaust gas which flows into the exhaust gas purifying device 26 when the exhaust gas is to be heated in an exhaust gas heating process. In this embodiment, an air-fuel ratio allowing efficient fuel combustion in the exhaust gas heating process, i.e. the target air-fuel ratio RT is set based on the exhaust gas temperature T_{E} detected by the exhaust gas temperature sensor 32 and the oxygen concentration of the exhaust gas flowing into the exhaust gas heating device 27 from the combustion chamber 10a. Fig. 4 schematically shows the relationship between the exhaust gas temperature T_{E} and the air-fuel ratio. Figs. 5 to 7 schematically show the relationships between the intake flow rate, air-fuel ratio, oxygen concentration and exhaust gas temperature T_{E} and regions allowing efficient fuel combustion in the exhaust gas heating process (hereinafter, referred to as the preferable combustion regions for convenience). Note that while the oxygen concentration is calculated by the operating status determining section 13a of the ECU, a well-known O₂ sensor may be installed upstream of the exhaust gas heating device 27 in the exhaust passage 23a. The preferable combustion region is a region enclosed by a dashed line in each of Figs. 5 to 7. By the target air-fuel ratio setting section 13j, a single value of the target air-fuel ratio R_{T} is set to such a value as to fall within each of these regions enclosed by the dashed line.

The fuel supply setting section 13k sets the amount of fuel to be supplied into the exhaust passage 23a from the fuel supply valve 27a. More specifically, based on the difference between a target catalyst temperature T_{T} and the catalyst temperature T_{C} detected by the catalyst temperature sensor 31, the fuel supply setting section 13k calculates the amount of fuel to be supplied into the exhaust passage 23a in the exhaust gas heating process for heating the exhaust gas, i.e. a target fuel supply amount F_{T}. In general, selected as the target catalyst temperature T_{T} is the lowest possible temperature for the oxidation catalyst 26a to be in an active state. The fuel supply setting section 13k also sets an amount F_{U} of fuel to be supplied into the exhaust passage 23a in a single current application to the fuel supply valve 27a (hereinafter, referred to as the unit supply amount), as well as the cycle of the current application (hereinafter, referred to as the supply cycle) t_{P}. The unit supply amount F_{U} is set based on an exhaust flow rate which is based on the information from the air flow meter 30. Basically, the larger the exhaust flow rate is, the larger the unit supply amount F_{U} is set. The supply cycle t_{P} is set such that adding the set unit supply amount F_{U} of fuel into the exhaust passage 23a results in the aforementioned target air-fuel ratio R_{T}.

Note that in a case where the fuel addition from the fuel supply valve 27a and the fuel injection from the fuel injection valve 11 are to be performed simultaneously, at least one of the target fuel supply amount F_{T} and the unit supply amount F_{U} is corrected by reducing it in accordance with the amount of the fuel to be injected from the fuel injection valve 27a. Moreover, in a case where the actual air-fuel ratio R_{N} differs from the target air-fuel ratio R_{T}, air-fuel ratio control is performed to make the actual air-fuel ratio R_{N} match the target air-fuel ratio R_{T}, and at least one the fuel injection amount, the air intake amount, and the EGR amount is corrected if necessary.

The fuel supply valve driving section 131 controls the actuation of the fuel supply valve 27a such that fuel is supplied into the exhaust passage 23a by the unit supply amount at the supply cycle set by the fuel supply setting section 13k.

In this embodiment, the operating status determining section 13a calculates the air-fuel ratio R_{N} of the exhaust gas immediately before flowing into the exhaust gas purifying device 26 on the basis of the air intake amount detected by the air flow meter 30, the fuel injection amount of the fuel injection valve 11, and the fuel supply amount of the fuel supply valve 27a. Alternatively, an air-fuel ratio sensor can be disposed downstream of the exhaust gas heating device 27 and upstream of the exhaust gas purifying device 26 in the exhaust passage 23a, and the air-fuel ratio R_{N} can be detected by use of a detection signal from the air-fuel ratio sensor.

As described, by introducing exhaust gas containing unburned fuel into the exhaust gas heating device 27, it is possible to minimize the concentration of the oxygen contained in the exhaust gas sent out to the exhaust gas heating device 27 from the combustion chamber 10a of the engine 10, and thereby to reduce the amount of smoke to be generated.

The ECU 13 of this embodiment is a well-known one-chip microprocessor and includes a CPU, a ROM, a RAM, a nonvolatile memory, an I/O interface, and the like which are connected to each other by an unillustrated data bus. This ECU 13 performs predetermined arithmetic processing on the basis of the detection signals from the above-mentioned sensors 14, 22, 31, and 32, air flow meter 30, and the like so that the engine 10 can operate smoothly. Moreover, the ECU 13 controls the actuations of the fuel injection valve 11, the throttle valve 19, the EGR control valve 29, the fuel supply valve 27a, the glow plug 27b, and the like in accordance with a preset program.

Accordingly, the intake air supplied into the combustion chamber 10a through the intake passage 17a form an air-fuel mixture together with the fuel injected into the combustion chamber 10a from the fuel injection valve 11. Then, normally, the air-fuel mixture undergoes spontaneous ignition and combustion immediately before the piston 20a reaches top dead center of the compression stroke. The resultant exhaust gas generated passes through the exhaust gas purifying device 26 and is released in a detoxified state into the atmosphere through the exhaust pipe 23.

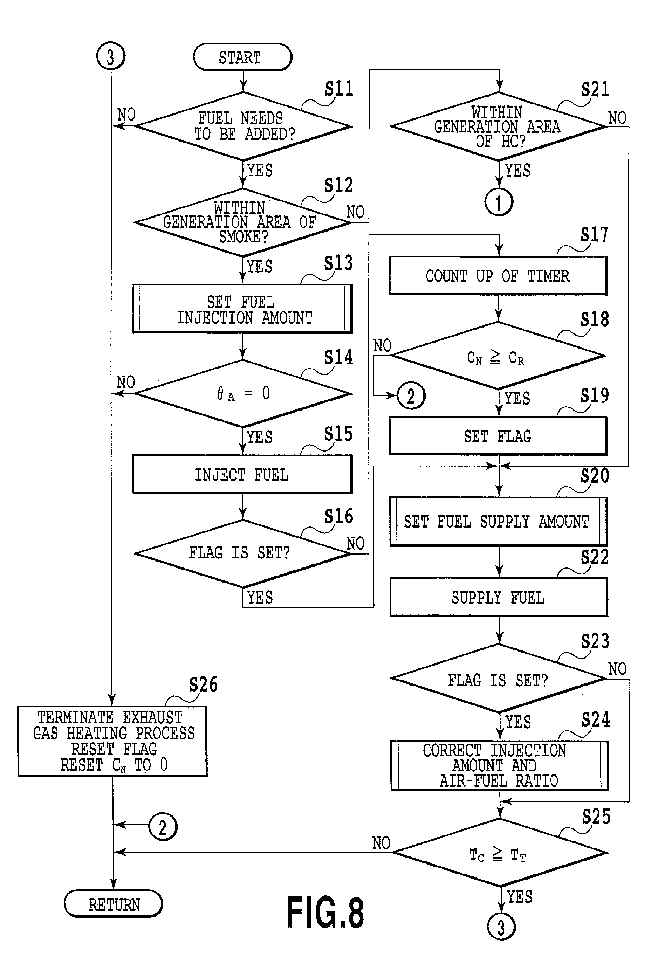

Meanwhile, the exhaust gas heating process of the present invention is performed while the engine 10 is in operation, in accordance with the state of the exhaust gas purifying device 26. Using the flowcharts in Figs. 8 to 11, a procedure for actuating the exhaust gas heating device 27 in this embodiment will be described. First, in step S11, it is determined whether or not fuel needs to be supplied. If it is judged in this step that fuel needs to be supplied, that is, the exhaust gas purifying device 26 needs to be activated, the procedure proceeds to step S12, where it is judged whether or not the current operating state is within an area involving the generation of a large amount of smoke. If it is judged in this step that the current operating state is within the generation area of a large amount of smoke, that is, it is desirable to inject fuel into the combustion chamber 10a from the fuel injection valve 11, the procedure proceeds to step S13, where a fuel injection amount setting process is performed.

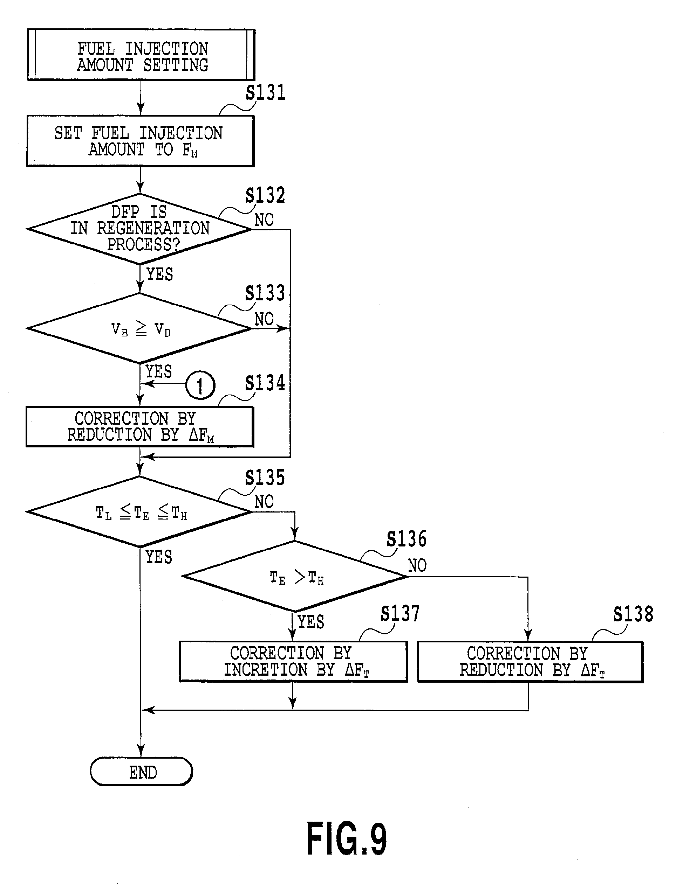

Specifically, in step S131 in Fig. 9, the fuel injection amount is set to F_{M}. Then, in step S132, it is determined whether or not the DPF 26b is in a regeneration process. If it is judged in this step that the DPF 26b is in a regeneration process, the procedure proceeds to step S133, where it is determined whether or not the PM burning rate V_{B} is equal to or greater than the PM deposition rate V_{D}. If it is judged in this step that the PM burning rate V_{B} is equal to or greater than the PM deposition rate V_{D}, that is, PM is decreasing due to the regeneration process of the DPF 26b, the procedure proceeds to step S134. There, the fuel injection amount F_{M} set in the step S131 is corrected by reducing it by ΔF_{M}, thus suppressing an increase in the amount of unburned HC to be generated.

Thereafter, in step S135, it is determined whether or not the exhaust gas temperature T_{E} is equal to or higher than the first threshold temperature T_{L} but is equal to or lower than the second threshold temperature T_{H}. If it is judged in this step that the exhaust gas temperature T_{E} is equal to or higher than the first threshold temperature T_{L} but is equal to or lower than the second threshold temperature T_{H}, that is, the exhaust gas temperature T_{E} is not too lower or too high, this subroutine for setting the fuel injection amount is terminated, and the procedure proceeds to step S14 in the main flowchart shown in Fig. 8. On the other hand, if it is judged in the step S135 that the exhaust gas temperature T_{E} is not equal to or higher than the first threshold temperature T_{L} or not equal to or lower than the second threshold temperature T_{H}, the procedure proceeds to step S136. This time, it is determined whether or not the exhaust gas temperature T_{E} is higher than the second threshold temperature T_{H}. If it is judged in this step that the exhaust gas temperature T_{E} is higher than the second threshold temperature T_{H}, that is, the amount of smoke to be generated will be greater than initially expected, then, in step S137, the fuel injection amount F_{M} set in the step S131 is corrected by increasing it by ΔF_{T}. On the other hand, if it is judged in the step S136 that the exhaust gas temperature T_{E} is not higher than the second threshold temperature T_{H}, that is, the exhaust gas temperature T_{E} is lower than the first threshold temperature T_{L} and therefore the amount of smoke to be generated will be less than initially expected, the procedure proceeds to step S138. There, the fuel injection amount F_{M} set in the step S131 is corrected by reducing it by ΔF_{T}, thus suppressing an increase in the amount of unburned HC to be generated.

When the exhaust gas temperature T_{E} is not equal to or higher than first threshold temperature T_{L} or not equal to or lower than second threshold temperature T_{H}, the fuel injection amount F_{M} set in the step S131 is corrected in the step S137 or S138 as described above, and then the fuel injection amount setting process in Fig. 9 is terminated. Thereafter, the procedure proceeds to the step S14 in Fig. 8.

In the step S14, it is determined whether or not the accelerator opening degree θ_{A} is 0. If it is judged in this step that the accelerator opening degree θ_{A} is 0, that is, the vehicle is decelerating or idling and no fuel is being injected into the combustion chamber 10a from the fuel injection valve 11, the procedure proceeds to step S15. In this step, injection of fuel from the fuel injection valve 11 into the combustion chamber 10a is started. The fuel is released to the exhaust passage 23a without being combusted inside the combustion chamber 10a, thereby lowering the oxygen concentration of the exhaust gas. As described, in this embodiment, fuel is injected into the combustion chamber 10a from the fuel injection valve 11 only when the vehicle is decelerating or idling. This makes it possible to minimize an awkward feel the driver experiences due to torque fluctuations of the engine 10. After step S15, it is determined in step S16 whether or not a flag is set. At first, a flag is not set, and the procedure therefore proceeds to step S17, where a timer is caused to count up, and it is determined in step S18 whether or not a count value C_{N} of the timer is equal to or greater than a target count value C_{T}. Subsequently, the procedure returns to the step S11 from the step S18 and the above-mentioned processes are basically repeated until the count value C_{N} of the timer reaches the target count value C_{T}.

When it is eventually judged in the step S18 that the count value C_{N} of the timer is equal to or great than the target count value C_{T}, that is, the exhaust gas containing the fuel injected from the fuel injection valve 11 has reached the exhaust gas heating device 27, the procedure proceeds to step S19, where a flag is set. Then, the procedure proceeds to step S20, where a fuel addition amount setting process is performed.

Meanwhile, in the step S12 mentioned earlier, if it is judged that the current operating state is not within the generation area of a large amount of smoke, that is, it is not necessary to inject fuel into the combustion chamber 10a, the procedure proceeds to step S21, where it is determined whether or not the current operating state is within an operating area involving the generation of a large amount of unburned HC. If it is judged in this step that the current operating state is within the generation area of a large amount of unburned HC, the procedure proceeds to the step S134 in Fig. 9, where the fuel injection amount F_{M} set in the step S131 is corrected by reducing it by ΔF_{M}, thus avoiding the generation of unburned HC. Moreover, if it is judged in the step S21 that the current operating state is not within the generation area of a large amount of unburned HC, that is, it is not necessary to inject fuel into the combustion chamber 10a from the fuel injection valve 11, the procedure proceeds directly to the step S20. Note that the procedure proceeds to the step S20 also when it is determined in the step S16 that a flag is set, that is, the exhaust gas containing the fuel injected from the fuel injection valve 11 has reached the exhaust gas heating device 27.

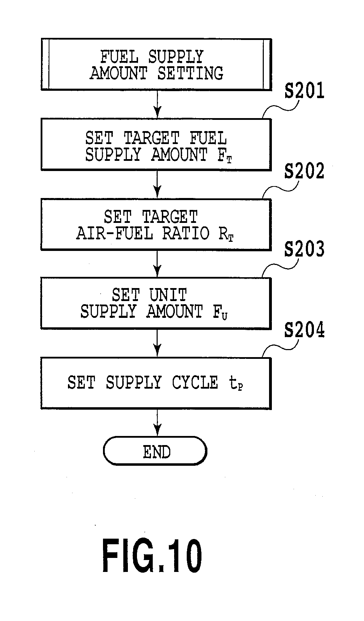

In a subroutine for setting the fuel supply amount in the step S20 shown in Fig. 10, first, in step S201, the target fuel supply amount F_{T} is set according to the difference between the catalyst temperature T_{C} and the target catalyst temperature T_{T}. Then, in step S202, the target air-fuel ratio R_{T} is set. Thereafter, in step S203, the unit supply amount F_{U} is calculated. Subsequently, in step S204, the supply cycle t_{P} is set according to the unit supply amount F_{U} and the target air-fuel ratio R_{T}, and then the fuel-addition-amount setting process is terminated. The procedure then proceeds to step S22 in the main flowchart shown in Fig. 8.

In this step S22, fuel is supplied into the exhaust passage 23a from the fuel supply valve 27a. The fuel is ignited and combusted by use of the ignition means, and the resultant hot exhaust gas is introduced into the exhaust gas purifying device 26. In this case, fuel is also injected into the combustion chamber 10a from the fuel injection valve 11 as needed so as to reduce the generation of both smoke and HC to a small amount. Accordingly, harmful effects of the smoke and HC on the exhaust gas purifying device 26 can be minimized. Thereafter, in step S23, it is determined whether or not a flag is set. If it is judged in this step that a flag is set, that is, fuel is also injected into the combustion chamber 10a from the fuel injection valve 11, the procedure proceeds to step S24, where an injection-amount air-fuel ratio correcting process is performed.

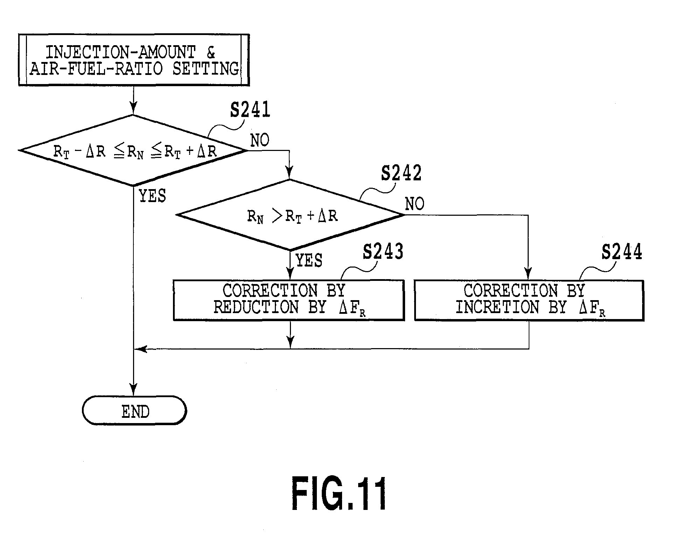

In a subroutine for correcting the injection amount and the air-fuel ratio shown in Fig. 11, first, in step S241, it is determined whether or not the current air-fuel ratio R_{N} is within a predetermined region with respect to the target air-fuel ratio R_{T}. If it is judged in this step that the current air-fuel ratio R_{N} is within the predetermined region with respect to the target air-fuel ratio R_{T}, that is, it is not necessary to correct the current air-fuel ratio, the injection amount air fuel ratio correcting process in Fig. 11 is terminated. The procedure then proceeds to step S25 in Fig. 8. On the other hand, if it is judged in the step S241 that the current air-fuel ratio R_{N} is outside the predetermined region with respect to the target air-fuel ratio R_{T}, the procedure proceeds to step S242, where it is determined whether or not the current air-fuel ratio R_{N} is greater than the target air-fuel ratio R_{T} by ΔR or greater. If it is judged in this step that the current air-fuel ratio R_{N} is greater than the target air-fuel ratio R_{T} by ΔR or greater, that is, the air-fuel ratio is so lean that smoke is easily generated, then in step S243, the fuel injection amount set in the step S13 is corrected by increasing it by ΔF_{R}. If it is judged in the step S242 that the current air-fuel ratio R_{N} is not greater than the target air-fuel ratio R_{T} by ΔR, that is, the air-fuel ratio is so rich that HC is easily generated, then in step S244, the fuel injection amount F_{M} set in the step S13 is corrected by reducing it by ΔF_{R}.

The procedure proceeds to step S25 once the current air-fuel ratio R_{N} is controlled to fall within the predetermined region with respect to the target air-fuel ratio R_{T} by correcting the fuel injection amount of the fuel injection valve 11 in accordance with the difference between the current air-fuel ratio R_{N} and the target air-fuel ratio R_{T} as described above.

Meanwhile, in the step S23 mentioned earlier, if it is judged that the a flag is not set, that is, fuel is not injected from the fuel injection valve 11, the procedure also proceeds to the step S25, where it is determined whether or not the catalyst temperature T_{C} has become equal to or higher than the target catalyst temperature T_{T}. If it is judged in this step that the catalyst temperature T_{C} is lower than the target catalyst temperature T_{T}, that is, it is necessary to continue heating the exhaust gas, the procedure returns to the step S11 and the above mentioned processes are repeated. On the other hand, if it is judged that the catalyst temperature T_{C} is equal to or higher than the target catalyst temperature T_{T}, that is, the exhaust gas purifying device 26 has shifted to an active state and the heating is no longer necessary, the procedure proceeds to step S26. Then, the exhaust gas heating process is terminated, and the count value C_{N} of the timer is reset to 0, and thereafter the procedure returns to the initial step S11. Moreover, the procedure proceeds to the step S26 also when the accelerator opening degree θ_{A} is not 0 in the step S14, that is, the driver is depressing the accelerator pedal 12 in the step S14. This is because the driver's depression of the accelerator pedal 12 starts the combustion of fuel inside the combustion chamber 10a and thus raises the exhaust gas temperature T_{E}, thereby eliminating the need for performing the exhaust gas heating process. Similarly, when it is judged in the step S11 mentioned earlier that fuel does not need to be injected, the procedure also proceeds to step S29, where the exhaust gas heating process is terminated and the count value C_{N} of the timer is reset to 0.

It is to be noted that the present invention shall be construed solely from the matters described in the claims thereof, and the foregoing embodiment includes not only the matters described above but any changes and corrections encompassed by the concept of the present invention. In other words, all the matters in the foregoing embodiment are not to limit the present invention, but include any configurations which may not be directly related to the present invention and can be changed optionally depending upon the application, purpose, and the like. Reference Signs List

- 10: engine
- 10a: combustion chamber
- 11: fuel injection valve
- 12: accelerator pedal
- 13: ECU
- 13a: operating status determining section
- 13b: fuel injection setting section
- 13c: fuel injection valve driving section
- 13d: PM deposition rate calculating section
- 13e: PM burning rate calculating section
- 13f: throttle opening setting section
- 13g: actuator driving section
- 13h: EGR amount setting section
- 13i: EGR valve driving section
- 13j: target air-fuel ratio setting section
- 13k: fuel supply setting section
- 131: fuel supply valve driving section
- 13m: glow plug driving section
- 14: accelerator opening sensor
- 15: cylinder head
- 15a: intake port
- 15b: exhaust port
- 16a: intake valve
- 16b: exhaust valve
- 17: intake pipe
- 17a: intake passage
- 17b: surge tank
- 18: throttle actuator
- 19: throttle valve
- 20a: piston
- 20b: connecting rod
- 20c: crankshaft
- 21: cylinder block
- 22: crank angle sensor
- 23: exhaust pipe
- 23a: exhaust passage
- 24: EGR system
- 25: exhaust turbocharger
- 25a: intake turbine
- 25b: exhaust turbine
- 25c: intercooler
- 26: exhaust gas purifying device
- 26a: oxidation catalytic converter
- 26b: DPF
- 27: exhaust gas heating device
- 27a: fuel supply valve
- 27b: glow plug
- 28: EGR pipe
- 28a: EGR passage
- 29: EGR control valve
- 30: air flow meter
- 31: catalyst temperature sensor
- 32: exhaust gas temperature sensor
- θ_{A}: accelerator opening degree
- C_{N}: count value of timer
- C_{T}: target count value
- F_{M}: fuel injection amount
- F_{T}: target fuel supply amount
- F_{U}: unit supply amount
- ΔF_{M}: fuel-injection correcting amount
- T_{C}: catalyst temperature
- T_{E}: exhaust gas temperature
- T_{H}: second threshold temperature
- T_{L}: first threshold temperature
- T_{T}: target catalyst temperature
- R_{N}: actual air-fuel ratio
- R_{T}: target air-fuel ratio
- V_{B}: PM burning rate
- V_{D}: PM deposition rate
- t_{P}: supply cycle

## Claims

1. A method of heating exhaust gas to be introduced into an exhaust gas purifying device from an internal combustion engine by supplying fuel into an exhaust passage from a fuel supply valve disposed upstream of the exhaust gas purifying device in an exhaust pipe upstream, and then by heating and igniting the fuel supplied into the exhaust passage, the method comprising steps of:
determining a necessity for supplying fuel into the exhaust passage;
setting an amount of fuel to be supplied into the exhaust passage from the fuel supply valve, the amount being set when it is judged in the determining step that fuel needs to be supplied into the exhaust passage;
checking an operating state of the internal combustion engine; and
controlling an air-fuel ratio of exhaust gas to be released into the exhaust passage from a combustion chamber of the internal combustion engine such that the air-fuel ratio falls within an area where amounts of both smoke and HC to be generated in the exhaust gas flowing through the exhaust passage are low in the operating state of the internal combustion engine checked in the checking step.

2. The method as claimed in claim 1, wherein the controlling step includes at least one of steps of:
setting an amount of fuel to be injected into the combustion chamber of the internal combustion engine from a fuel injection valve such that an amount of oxygen to be released into the exhaust passage from the combustion chamber of the internal combustion engine is reduced;
setting an opening degree of a throttle valve; and
setting an opening degree of an EGR control valve.

3. The method as claimed in claim 2, wherein the step of setting the fuel supply amount includes a step of correcting the fuel supply amount set in the step of setting the fuel supply amount by reducing the fuel supply amount in accordance with the fuel injection amount set in the step of setting the fuel injection amount.

4. The method as claimed in claim 2 or 3, wherein
the controlling step includes the step of setting the fuel injection amount,
the checking step includes a step of obtaining a temperature of the exhaust gas, and the method further comprising a step of
correcting the fuel injection amount set in the step of setting the fuel injection amount in accordance with the temperature of the exhaust gas obtained in the step of obtaining the temperature of the exhaust gas.

5. The method as claimed in claim 4, wherein in the step of correcting the fuel injection amount, the fuel injection amount set in the step of the fuel injection amount is corrected by increasing the fuel injection amount during an operating state in which the temperature of the exhaust gas is high, while the fuel inj ection amount set in the step of setting the fuel inj ection amount is corrected by reducing the fuel injection amount during an operating state in which the temperature of the exhaust gas is low.

6. The method as claimed in any one of claims 2 to 5, wherein
the controlling step includes the step of setting the fuel injection amount,
the checking step includes a step of obtaining an air-fuel ratio of the exhaust gas to be released into the exhaust passage from the combustion chamber of the internal combustion engine, and the method further comprising a step of
correcting the fuel injection amount set in the step of setting the fuel injection amount in accordance with the air-fuel ratio of the exhaust gas obtained in the step of obtaining the air-fuel ratio of the exhaust gas.

7. The method as claimed in claim 6, wherein in the step of correcting the fuel injection amount, the fuel injection amount set in the step of setting the fuel injection amount is corrected by increasing the fuel injection amount when the air-fuel ratio of the exhaust gas is within a lean region, while the fuel injection amount set in the step of setting the fuel injection amount is corrected by reducing the fuel injection amount when the air-fuel ratio of the exhaust gas is within a rich region.

8. The method as claimed in any one of claims 1 to 7, wherein
the exhaust gas purifying device includes a DPF, and
the step of setting the fuel injection amount includes a step of correcting the fuel injection amount set in the step of setting the fuel injection amount by reducing the fuel injection amount when it is judged that fuel needs to be supplied into the exhaust passage in the determining step during a regeneration process of the DPF.
